# EUROPÄISCHE PATENTSCHRIFT

(11) **EP 3 655 937 B1**
(45) Veröffentlichungstag und Bekanntmachung des Hinweises auf die Patenterteilung: **07.08.2024**
(21) Anmeldenummer: 18734546.7
(22) Anmeldetag: 27.06.2018
(51) Int. Cl.: G08G 1/14, G08G 1/16

(54) **VORRICHTUNG UND VERFAHREN ZUM BEREITSTELLEN EINER ZUSTANDSINFORMATION EINES AUTOMATISCHEN VALET PARKING SYSTEMS**
DEVICE AND METHOD FOR PROVIDING STATE INFORMATION OF AN AUTOMATIC VALET PARKING SYSTEM
DISPOSITIF ET PROCÉDÉ POUR PRODUIRE UNE INFORMATION D'ÉTAT D'UN SYSTÈME DE VOITURIER AUTOMATIQUE

(30) Priorität: 21.07.2017 DE 102017212533
(43) Veröffentlichungstag der Anmeldung: 27.05.2020
(73) Patentinhaber: Robert Bosch GmbH, 70442 Stuttgart (DE)
(72) Erfinder: MERGENTHALER, Alexander, 71334 Waiblingen (DE); NORDBRUCH, Stefan, 70806 Kornwestheim (DE); BOSATELLI, Simone, 70176 Stuttgart (DE); KROEGER, Martin, 70199 Stuttgart (DE); WACK, Roman, 66453 Peppenkum (DE); LEHN, Andreas, 71642 Ludwigsburg (DE); SCHAUPP, Stefan, 70839 Gerlingen (DE); PATEL, Karan, Chicago Illinois 60622 (US)
(86) Internationale Anmeldenummer: PCT/EP2018/067202
(87) Internationale Veröffentlichungsnummer: WO 2019/015927

(56) Entgegenhaltungen:
- WO-A1-2016/066349
- DE-A1- 102015 208 068
- DE-A1- 102015 218 350
- KR-A- 20090 020 222
- US-A1- 2010 161 128

## Beschreibung

Die Erfindung betrifft eine Vorrichtung und ein Verfahren zum Bereitstellen einer Zustandsinformation eines automatischen Valet Parking Systems. Die Erfindung betrifft des Weiteren automatisches Valet Parking System. Die Erfindung betrifft ferner ein Computerprogramm.

### Stand der Technik

Die Offenlegungsschrift DE 10 2015 201 209 A1 zeigt ein Valet-Parking System zum automatischen Verbringen eines Fahrzeugs von einer Übergabezone zu einem zugewiesenen Stellplatz innerhalb eines vorgegebenen Parkraums. Das bekannte System umfasst ein Parkplatzüberwachungssystem mit mindestens einer ortsfest angeordneten Sensoreinheit. Das Parkplatzüberwachungssystem ist ausgebildet, die innerhalb des vorgegebenen Parkraums fahrenden Fahrzeuge zu lokalisieren.

Die Offenlegungsschrift KR 20090020222 A beschreibt ein automatisches Parkraumbewirtschaftungssystem. Um die Effektivität des Parkens zu verbessern und die Verwaltungskosten zu reduzieren, wird ein sicherer Zustand des Parkplatzes vor der Einfahrt in den Parkplatz erkannt und auf einer Parkstatustafel ausgegeben. Die Statustafel kann außerdem einen Belegungszustand des Parkplatzes anzeigen.

Die Offenlegungsschrift DE 102015208068 A1 beschreibt ein Verfahren zum Steuern eines automatisierten Parkbetriebs, bei dem ein Kraftfahrzeug auf einer Strecke zwischen einer Übergabestelle und einem Abstellplatz autonom gesteuert wird (AVP). Dabei wird erfasst, ob sich während eines autonomen Fahrvorgangs eine Person an Bord des Kraftfahrzeugs befindet. Wird außerdem bestimmt, dass für den Transport der Person auf der Fahrt keine Erlaubnis vorliegt, werden eine oder mehrere Aktionen durchgeführt. Zu diesen Aktionen kann das Ausgeben einer Warnung mittels eines Infrastrukturelements gehören.

Die Offenlegungsschrift DE 102015218350 A1 offenbart ein Verfahren zur Parkraumoptimierung für einen Parkraum, wobei der Parkraum markierte Parkflächen und Durchfahrtswege umfasst. Einem ersten Fahrzeug wird ein freier Stellplatz zugewiesen und es werden erste Informationen bereitgestellt, mittels derer das erste Fahrzeug den zugewiesenen Stellplatz insbesondere autonom, ansteuern kann. Das Zuweisen des freien Parkplatzes erfolgt dabei derart, dass abhängig von dem aktuellen Belegungszustand des Parkraums ein freier Stellplatz auf einer ausgewiesenen Parkfläche oder ein freier Stellplatz auf einem Durchfahrtsweg zugewiesen wird. In dem Fall dass mindestens ein auf einem Durchfahrtsweg geparktes zweites Fahrzeug die Fahrt des ersten Fahrzeugs innerhalb des Parkraums blockiert, werden dem zweiten Fahrzeug Informationen bereitgestellt werden, mittels derer das zweite Fahrzeug automatisch eine Zwischenposition ansteuern kann, um einen Durchfahrtsweg für die Durchfahrt des ersten Fahrzeugs zumindest zeitweise freizugeben.

Die Offenlegungsschrift US 2010/0161128 A offenbart ein automatisches Parkleitsystem umfassend einen beweglichen Parkroboter zum Transportieren eines zu parkenden Fahrzeugs, einen Parkleitserver, der dem Parkroboter eine Bewegungsbahn zum Zielparkplatz zur Verfügung stellt, und einen oder mehrere Pfosten, die in der Nähe eines zugänglichen Parkbereichs installiert sind, um eine Bewegungsbahn des Parkroboters in Echtzeit durch Kommunikation mit dem Parkroboter zu steuern.

Die Offenlegungsschrift WO16066349 A1 offenbart ein Verfahren zum Betreiben eines Fahrzeugs, wobei das Fahrzeug auf einem Parkplatz autonom fährt und während seiner autonomen Fahrt zumindest ein Signal an sein Umfeld aussendet, um dem Umfeld zu signalisieren, dass es autonom fährt.

### Offenbarung der Erfindung

Die der Erfindung zugrunde liegende Aufgabe ist darin zu sehen, ein Konzept zum effizienten Bereitstellen von Zustandsinformationen über ein automatisches Valet-Parking System bereitzustellen, so dass beispielsweise andere sich innerhalb des dem automatischen Valet-Parking System zugeordneten Parkraums bewegende Verkehrsteilnehmer ihr Verhalten anpassen können und beispielsweise Gefahren vermieden werden.

Nach einem ersten Aspekt der Erfindung wird eine Vorrichtung zum Bereitstellen einer Zustandsinformation eines automatischen Valet-Parking Systems (auch als AVP-System bezeichnet) gemäß Anspruch 1 vorgeschlagen. Die Vorrichtung umfasst mindestens eine fahrzeugexterne Infrastrukturkomponente, die innerhalb eines dem automatischen Valet-Parking System zugeordneten Parkraums, insbesondere stationär, angeordnet ist. Die Infrastrukturkomponente ist eingerichtet, eine Zustandsinformation des automatischen Valet-Parking Systems auszugeben. Somit können Zustandsinformationen des automatischen Valet-Parking Systems effizient kommuniziert werden.

Gemäß einer Ausführung der Erfindung ist mindestens eine Infrastrukturkomponente ausgebildet, die Zustandsinformation auditiv auszugeben. Dazu kann die Infrastrukturkomponente insbesondere einen Lautsprecher aufweisen. Die Zustandsinformation kann in Form von Tönen, vorgelesenen Texten, Ansagen oder ähnlichem ausgegeben werden.

Gemäß einer Ausführung der Erfindung ist mindestens eine Infrastrukturkomponente ausgebildet, die Zustandsinformation visuell auszugeben. Dazu kann die Infrastrukturkomponente insbesondere einen Bildschirm und/oder eine Ampel und/oder eine Beleuchtungseinrichtung, wie z.B. eine Lampe, eine oder mehrere LED und/oder eine Flagge aufweisen und/oder ein Schild, insbesondere ein beleuchtetes Schild. Die Zustandsinformation kann in Form von Lichtsignalen, Farbsignalen, angezeigten Texten, Symbolen oder ähnlichem ausgegeben werden. Unter den Begriff Beleuchtungseinrichtung kann zum Beispiel auch eine Lampe verstanden werden, die verschiedene Zustände annehmen kann, zum Beispiel unterschiedliche Farben und/oder Blinkmuster ausgeben kann.

Gemäß einer Ausführung der Erfindung ist mindestens eine Infrastrukturkomponente ausgebildet, die Zustandsinformation haptisch auszugeben. Dazu kann die Infrastrukturkomponente insbesondere eine im Boden des Parkraums eingelassene Komponente, wie z.B. eine Platte aufweisen, die bewegbar ist. Die Zustandsinformation kann in Form von Vibrationen und/oder gerichteten Bewegungen der Platte ausgegeben werden.

Bevorzugt ist bzw. sind die Infrastrukturkomponente(n) z.B. am Boden, an der Wand, an der Decke, an Geländern oder an anderen Gebäudeelementen des Parkraums befestigt. In einer Variante können die Infrastrukturkomponente(n) ein ausschließlich für die Infrastrukturkomponente vorgesehenes Gehäuse aufweisen. Alternativ kann eine Infrastrukturkomponente in eine andere bereits in dem Parkraum vorhandene Komponente integriert sein, beispielsweise in ein Beleuchtungssystem oder ein Umfeldüberwachungssystem.

In einer möglichen Ausführung werden vorhandene Komponenten von anderen in dem Parkraum bereits vorhandenen Systemen (z.B. Lautsprecheranlagen oder Alarmsystemen) zur Ausgabe der Zustandsinformation mit genutzt.

So kann auch vorgesehen sein, dass die Infrastrukturkomponente ausgebildet ist, mindestens eine zweite Information, z.B. einen Alarm oder eine Durchsage auszugeben. Die zweite Information kann entweder eine weitere Zustandsinformation des automatischen Valet-Parking Systems umfassen oder eine andere Information.

Erfindungsgemäß umfasst die Zustandsinformation eine Information über einen aktuellen Betriebszustand des automatischen Valet-Parking Systems. In einer Variante ist die Zustandsinformation, eine Information, dass in dem Parkraum ein automatisches Valet-Parking System bzw. ein automatischer Valet-Parking Service eingesetzt wird, d.h. dass sogenannte AVP-Fahrzeuge in dem Parkraum automatisiert, also fahrerlos fahren und parken. Dies kann z.B. durch Anzeigen ("Werbetext") mit genauen Informationen über das automatische Valet-Parking System ausgeführt sein. In einer Variante umfasst die Zustandsinformation einen aktuellen Betriebszustand des Systems, wie z.B.
- AVP-System ist im Betrieb oder nicht im Betrieb. Die Ausgabe erfolgt dann z.B. über eine Status-Lampe und/oder entsprechenden Text.
- AVP-System ist fehlerfrei im Betrieb. Die Ausgabe erfolgt dann z.B. über eine grün leuchtende (LED)-Lampe.
- AVP-System hat einen Fehler. Die Ausgabe erfolgt dann z.B. über eine rot leuchtende (LED)-Lampe.
- AVP-System hat einen unbekannten Zustand. Die Ausgabe erfolgt dann z.B. über eine gelb leuchtende (LED)-Lampe.

Erfindunsgemäß umfasst die Zustandsinformation eine Information über eine aktuell ausgeführte Aktion und/oder eine zukünftige Aktion eines sich innerhalb des Parkraums automatisiert bewegenden Fahrzeugs.

Die Zustandsinformation umfasst eine Information über eine aktuelle Position und eine aktuelle Bewegungsrichtung und/oder eine zukünftige Position und eine aktuelle Bewegungsrichtung eines sich innerhalb des Parkraums automatisiert bewegenden Fahrzeugs.

Derartige aktuelle Zustandsinformationen können z.B. umfassen
- AVP Fahrzeug fährt los
- AVP Fahrzeug bremst
- AVP Fahrzeug parkt ein.

Zukünftige, insbesondere unmittelbar bevorstehende Aktionen können z.B. eine der folgenden Zustandsinformationen ergeben:
- AVP Fahrzeug fährt in X Sekunden los (z.B. in X = 10 Sek.)
- AVP Fahrzeug kommt in Kürze um die bestimmte Ecke
- AVP Fahrzeug fährt in Kürze nach links oder nach rechts
- AVP Fahrzeug parkt in Kürze auf einen bestimmten Stellplatz ein, wobei eine Kennung des Stellplatzes mit ausgegeben werden kann.

Diese oder derartige Zustandsinformationen können insbesondere visuell, beispielsweise in Form von durch eine Infrastrukturkomponente angezeigten Text oder Symbole ausgegeben werden. Alternativ oder zusätzlich können diese oder derartige Zustandsinformationen z.B. insbesondere auditiv, beispielsweise in Form von Durchsagen bzw. dem Abspielen von gesprochenen Texten ausgegeben werden.

Damit wird der Vorteil erreicht, dass andere Verkehrsteilnehmer, insbesondere Fußgänger über die aktuellen Bewegungen der AVP-Fahrzeuge informiert sind und so gefährliche Situationen effizient vermieden werden können.

In einer weiteren Variante werden Zustandsinformationen für den System-Betreiber ausgegeben. Dabei handelt es sich um AVP-System-interne Informationen, wie z.B. eine Systeminformation, insbesondere eine Information über einen Systemfehler wie z.B. "Keine Kommunikation vom AVP System zu AVP Fahrzeug" und/oder eine Debuginformation, wie z.B. "Fehler A in Komponente X nach Operationsschritt Z", wobei "A" für eine Fehlerkennung, "X" für die betroffene Fahrzeugkomponente oder Komponente des AVP-Systems und "Z" für eine Kennung eines betroffenen Operationsschrittes" stehen. Eine Debuginformation ist also eine spezifische Fehlerinformation, bei der genaue Informationen über die Art und das Auftreten eines Systemfehlers kommuniziert werden. Damit wird der Vorteil erreicht, dass z.B. technisches Personal des AVP-Systems Fehler schnell erkennen und beheben kann.

Die Zustandsinformationen sind außerdem eine Information über eine aktuell ausgeführte Aktion und/oder eine zukünftige Aktion einer Parkraumkomponente, insbesondere eine mechanische Parkraumkomponente umfassen, wobei die Parkraumkomponente insbesondere eine Schranke und/oder ein Tor und/oder eine Tür und/oder eine Absperrung ist. Auch damit wird der Vorteil erreicht, dass gefährliche Situationen, die sich durch die bevorstehende Bewegung der Parkraumkomponente für andere Verkehrsteilnehmer oder Fußgänger ergeben könnte, effizient vermieden werden.

Nach einem zweiten Aspekt der Erfindung wird ein Verfahren gemäß Anspruch 11 zum Bereitstellen einer Zustandsinformation eines automatischen Valet-Parking Systems vorgeschlagen, welches mindestens die Schritte umfasst:
- Erfassen einer Zustandsinformation des automatischen Valet-Parking Systems.

Technische Funktionalitäten des Verfahrens ergeben sich analog aus entsprechenden technischen Funktionalitäten der Vorrichtung und umgekehrt.

Erfindungsgemäß ist eine Mehrzahl von Infrastrukturkomponenten vorgesehen, wobei das Ausgeben der Zustandsinformation abhängig von einer erfassten aktuellen Situation des Systems und/oder einer aktuellen Situation in dem Parkraum und abhängig von der jeweiligen Position der Infrastrukturkomponenten auf ausgewählten Infrastrukturkomponenten erfolgt. Damit kann die Kommunikation über die Infrastrukturkomponenten gezielt auf die Situation innerhalb des Parkraumes angepasst werden. Zum Beispiel wird nur über diejenigen Infrastrukturkomponenten kommuniziert, in dessen Umfeld sich Personen, Verkehrsteilnehmer, Fahrzeuge usw. befinden. Die aktuelle Situation kann dabei z.B. durch eine zentrale Parkmanagementeinrichtung des AVP-Systems und dessen Umfeldüberwachungssystem (z.B. Kameras, Lidarsensoren.) erfasst bzw. analysiert werden. Damit kann eine effiziente Ausgabe der Zustandsinformation erfolgen, so dass nur dort, also mittels derjenigen Infrastrukturkomponenten eine Ausgabe erfolgt, wo diese von den Adressaten auch wahrgenommen werden kann. Damit wird insbesondere bei einer visuellen Ausgabe der Zustandsinformationen ein effizientes Betreiben der Infrastrukturkomponenten ermöglicht.

Bevorzugt kann die Zustandsinformation zusätzlich mittels eines Ausgabesystems eines sich innerhalb des Parkraums automatisiert bewegenden Fahrzeugs ausgegeben werden, z.B.
- auditiv (z.B. mittels einer Hupe, Lautsprecher, ...) und/oder
- visuell (z.B. mittels der Fahrzeugbeleuchtung, der Blinker, Zusatzlampen, der Innenraumbeleuchtung des Fahrzeugs, ...) und / oder
- "haptisch" (z.B. durch schnelle Bewegungen des Fahrzeuges).

Die Zustandsinformation kann außerdem zusätzlich an ein Mobilgerät, insbesondere ein Smart Phone und / oder eine fahrzeuginterne Kommunikationseinrichtung gesendet werden.

Nach einem dritten Aspekt der Erfindung wird ein Computerprogramm angegeben, welches Programmcode zur Durchführung eines erfindungsgemäßen Verfahrens zum Bereitstellen einer Zustandsinformation eines automatischen Valet-Parking Systems umfasst, wenn das Computerprogramm auf einem Computer ausgeführt wird.

Nach einem vierten Aspekt der Erfindung wird ein Automatisches Valet-Parking (AVP-) System umfassend eine erfindungsgemäß ausgebildete Vorrichtung und eine zentrale Parkmanagementeinrichtung. Die Parkmanagementeinrichtung ist ausgebildet, eine Zustandsinformation des automatischen Valet-Parking Systems zu erfassen und mindestens eine Infrastrukturkomponente zur Ausgabe der Zustandsinformation anzusteuern.

Nach einem fünften Aspekt der Erfindung wird eine Infrastrukturkomponente bereitgestellt, die insbesondere zur Verwendung in einer erfindungsgemäß ausgeführten Vorrichtung und/oder in einem erfindungsgemäß ausgebildeten Verfahren und/oder in einem erfindungsgemäß ausgebildeten automatischen Valet-Parking System vorgesehen ist. Die Infrastrukturkomponente ist ausgebildet, stationär innerhalb eines Parkraums angeordnet zu werden und ist eingerichtet, eine Zustandsinformation eines automatischen Valet-Parking Systems auszugeben.

In einer bevorzugten Ausführung umfasst die Infrastrukturkomponente einen Trägerabschnitt und mindestens eine Beleuchtungseinrichtung, wobei die Beleuchtungseinrichtung ausgebildet ist verschiedene Zustände anzunehmen, wobei ein jeweiliger Zustand einer bestimmten Zustandsinformation des automatischen Valet-Parking Systems zugeordnet ist.

Besonders bevorzugt ist ein Zustand der Beleuchtungseinrichtung durch eine Lichtfarbe und/oder ein Blinkmuster gekennzeichnet, wobei jede Lichtfarbe und jedes Blinkmuster und/oder Kombinationen von Lichtfarbe und Blinkmuster einer bestimmten Zustandsinformation des automatischen Valet-Parking Systems entsprechen können.

### Kurze Beschreibung der Zeichnungen

Figur 1 zeigt eine schematische Ansicht eines Parkraumes, in dem ein automatisches Valet-Parking System betrieben wird..
Figuren. 2 a) und b) zeigen schematisch zwei Beispiele für erfindungsgemäß ausgestaltete Infrastrukturkomponenten zum visuellen Ausgeben einer Zustandsinformation eines Valet-Parking Systems.
Figur 3 zeigt ein Flussdiagramm eines Verfahrens gemäß einer Ausführung der Erfindung.

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

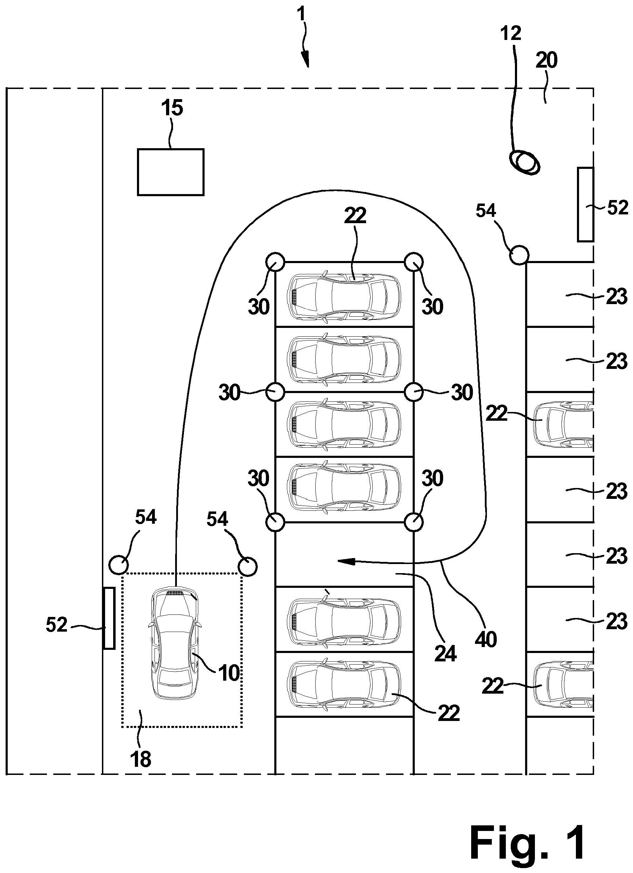

So zeigt Figur 1 beispielhaft einen Ausschnitt eines Parkraums 20, der Teil eines AVP-Systems ist. Der Parkraum 20 weist verschiedene Stellplätze 23 für AVP-Fahrzeuge auf. Der Parkraum 20 umfasst eine Übergabezone 18, an der ein Fahrzeug 10 an den Betreiber des Parkplatzes 20 übergeben werden kann. Dazu fährt der Fahrer des Fahrzeugs 10 sein Fahrzeug 10 in die Übergabezone 18, verlässt sein Fahrzeug 10 und übergibt sein Fahrzeug 10 an den Betreiber des Parkplatzes 20.

Zur Überwachung des Fahrzeugs 10, das sich innerhalb des Parkplatzes 20 bewegt, ist dem Parkraum 20 ein Umfeldüberwachungssystem zugeordnet, das eine Mehrzahl von beispielsweise als LIDAR-Sensoren ausgebildete Umfeldsensoren 30 umfasst.

Nach der Übergabe des Fahrzeugs 10 an den Parkplatzbetreiber wird dem Fahrzeug 10 durch eine Parkmanagementeinrichtung 15, z.B. einen Server, aus den möglichen freien Stellplätzen 23 ein freier Stellplatz als Parkposition 24 zugewiesen. Bereits belegte Stellplätze sind in der Figur mit dem Bezugszeichen 22 gekennzeichnet.

Nach Zuweisung der Parkposition wird das Fahrzeug 10 auf den als zugewiesenen freien Stellplatz 24 bewegt. Das Fahrzeug 10 ist beispielsweise eingerichtet, ein Fahrmanöver autonom mithilfe eines Parkassistenzsystems auszuführen. Der Parkmanagementeinrichtung 15 wird Zugriff auf das Parkassistenzsystem gewährt, so dass sich das Fahrzeug 10 auf dem Parkplatz 10 autonom bewegen kann und selbstständig die Parkposition 24 ansteuert. Erfindungsgemäß werden von der Parkmanagementeinrichtung 15 entsprechende Informationen an das Fahrzeug 10 übermittelt, so dass das Fahrzeug 10 autonom entlang einer auf den Informationen basierenden Trajektorie 40 innerhalb des Parkraums 20 geführt werden kann. Alternativ kann das Fahrzeug 10 ferngesteuert entlang der Trajektorie 40 zu der Parkposition 24 gesteuert werden.

Gemäß der Erfindung sind innerhalb des Parkraums stationär angeordnete Infrastrukturkomponenten 52 und 54 angeordnet, die dazu ausgebildet sind eine oder mehrere Zustandsinformationen des automatischen Valet-Parking Systems 1 auszugeben. Die Zustandsinformationen werden von der Parkmanagementeinrichtung 15 erfasst, beispielsweise mittels der Umfeldsensoren 30. Die Infrastrukturkomponenten 52 und 54 werden von der Parkmanagementeinrichtung 15 angesteuert, um die Zustandsinformationen auszugeben. Die Übertragung der entsprechenden Steuerbefehle kann beispielsweise drahtlos oder drahtgebunden erfolgen.

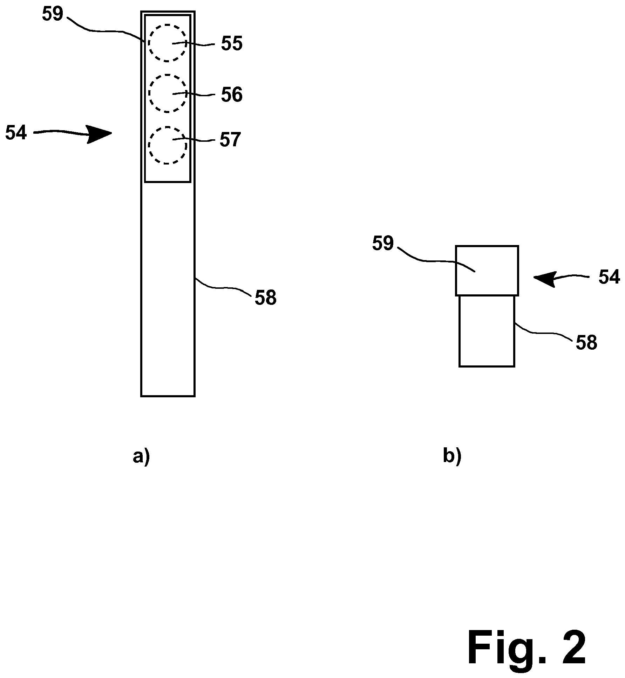

Die Infrastrukturkomponenten 52 sind in diesem Beispiel als Anzeigetafeln bzw. Displays ausgebildet, auf denen die Zustandsinformationen in Bild- oder Textform dargestellt werden. Eine Person 12, die sich zu Fuß innerhalb des Parkraums 20 bewegt, kann so über einen aktuellen Zustand des Valet-Parking Systems 1 informiert werden, beispielsweise kann durch einen entsprechenden Text und/oder Symbole angezeigt werden, dass sich in Kürze ein AVP-Fahrzeug 10 in die Umgebung der Infrastrukturkomponente 52 bewegen wird und/oder dass das Valet-Parking Systems in Betrieb ist. Ein Fahrer, der sein Fahrzeug 10 an der Übergabezone 18 abgibt oder abholt kann ferner mittels im Bereich der Übergabezone angeordneter Die Infrastrukturkomponenten 52, 54 über den aktuellen Zustand informiert werden. Die Infrastrukturkomponenten 54 sind in diesem Beispiel Beleuchtungseinrichtungen mit mehrfarbigen LEDs ausgebildet durch die eine Zustandsinformation des Valet-Parking Systems 1 ausgegeben wird, wie in Fig. 2 näher beschrieben wird.

In Figur 2 sind zwei Beispiele für mögliche Ausführungen einer Infrastrukturkomponente 54 schematisch dargestellt.

Die Infrastrukturkomponente 54 der Figur 2 a) weist einen säulenartigen Trägerabschnitt 58, sowie eine Beleuchtungseinrichtung 59 auf. Die Beleuchtungseinrichtung 59 umfasst in diesem Beispiel drei LED-Einheiten 55, 56 und 57, die jeweils LEDs einer unterschiedlichen Farbe umfassen. So kann die erste LED-Einheit 55 rote LEDs umfassen, die zweite LED-Einheit 56 kann gelbe LEDs umfassen und die dritte LED-Einheit 57 kann grüne LEDs umfassen.

Die Infrastrukturkomponente 54 ist ausgebildet, eine Zustandsinformation auszugeben, die eine Information über einen aktuellen Betriebszustand des automatischen Valet-Parking Systems 1 repräsentiert. Wenn das AVP-System 1 fehlerfrei im Betrieb ist wird die Infrastrukturkomponente 54 beispielsweise derart angesteuert, dass ausschließlich die dritte LED-Einheit 57 leuchtet. Wenn das AVP-System 1 einen Fehler aufweist, wird die Infrastrukturkomponente 54 beispielsweise derart angesteuert, dass ausschließlich die erste LED-Einheit 55 leuchtet. Wenn sich das AVP-System 1 in einem unbekannten Betriebszustand befindet, wird die Infrastrukturkomponente 54 beispielsweise derart angesteuert, dass ausschließlich die zweite LED-Einheit 56 leuchtet. Alternativ oder zusätzlich kann die Beleuchtungseinrichtung 59 derart angesteuert werden, dass Blinkmuster erzeugt werden, die eine Zustandsinformation repräsentieren.

Die in Figur 2 b) schematisch dargestellte Infrastrukturkomponente 54 umfasst ebenfalls einen Trägerabschnitt 58, der im Vergleich zur Figur 2 a) jedoch kürzer ausgebildet ist, sowie eine Beleuchtungseinrichtung 59. Die Beleuchtungseinrichtung 59 kann ausgebildet sein, verschiedene Zustände anzunehmen, die verschiedene Zustandsinformationen repräsentieren. Wie im Zusammenhang mit Figur 2 a) beschrieben, können die Zustände beispielsweise durch verschiedene Farben und/oder Blinkmuster dargestellt werden.

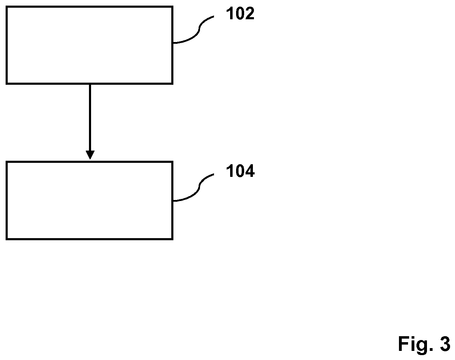

Figur 3 zeigt ein Flussdiagramm eines Verfahrens gemäß einer Ausführung der Erfindung.

In einem ersten Schritt 102 wird mindestens eine Zustandsinformation eines automatischen Valet-Parking Systems erfasst.

In einem zweiten Schritt 104 wird die Zustandsinformation ausgegeben. Die Ausgabe erfolgt mittels einer oder mehrerer Infrastrukturkomponenten, die innerhalb eines dem automatischen Valet-Parking System zugeordneten Parkraums stationär, angeordnet sind und eingerichtet ist, die Zustandsinformation beispielsweise auditiv und/oder visuell und/oder haptisch auszugeben.

## Patentansprüche

1. Vorrichtung zum Bereitstellen einer Zustandsinformation eines automatischen Valet-Parking Systems (1), umfassend eine Mehrzahl von fahrzeugexternen Infrastrukturkomponenten (52, 54), die innerhalb eines dem automatischen Valet-Parking System (1) zugeordneten Parkraums (20) stationär, angeordnet sind und eingerichtet sind, eine Zustandsinformation des automatischen Valet-Parking Systems (1) auszugeben, wobei die Zustandsinformation eine Information über einen aktuellen Betriebszustand des automatischen Valet-Parking Systems (1) umfasst und die Zustandsinformation eine Information über eine aktuell ausgeführte Aktion und/oder eine zukünftige Aktion eines sich innerhalb des Parkraums (20) automatisiert bewegenden Fahrzeugs (10) umfasst und die Zustandsinformation eine Information über eine aktuelle Position und eine aktuelle Bewegungsrichtung des sich innerhalb des Parkraums (20) automatisiert bewegenden Fahrzeugs (10) umfasst, und wobei das Ausgeben der Zustandsinformation auf ausgewählten Infrastrukturkomponenten (52, 54) erfolgt, abhängig von einer aktuellen Situation in dem Parkraum (20) und der jeweiligen Position der Infrastrukturkomponenten (52, 54), wobei eine aktuelle Situation des automatischen Valet-Parking Systems (1) durch eine zentrale Parkmanagementeinrichtung (15) des automatischen Valet-Parking Systems (1) und dessen Umfeldüberwachungssystem erfasst und analysiert wird, so dass nur mittels derjenigen Infrastrukturkomponenten (52, 54) eine Ausgabe erfolgt, wo diese von einem Adressaten wahrgenommen werden kann..

2. Vorrichtung nach Anspruch 1, **dadurch gekennzeichnet, dass** mindestens eine Infrastrukturkomponente (52, 54) ausgebildet ist, die Zustandsinformation auditiv auszugeben, wobei die Infrastrukturkomponente insbesondere einen Lautsprecher aufweist.

3. Vorrichtung nach Anspruch 1, **dadurch gekennzeichnet, dass** mindestens eine Infrastrukturkomponente (52, 54) ausgebildet ist, die Zustandsinformation visuell auszugeben, wobei die Infrastrukturkomponente insbesondere einen Bildschirm und/oder eine Ampel und/oder eine Beleuchtungseinrichtung und/oder eine Flagge aufweist.

4. Vorrichtung nach Anspruch 1, **dadurch gekennzeichnet, dass** mindestens eine Infrastrukturkomponente (52, 54) ausgebildet ist, die Zustandsinformation haptisch auszugeben, wobei die Infrastrukturkomponente insbesondere eine im Boden des Parkraums (20) eingelassene Komponente aufweist, die bewegbar ist.

5. Vorrichtung nach einem der Ansprüche 1 bis 4 **dadurch gekennzeichnet, dass** mindestens eine Infrastrukturkomponente (52, 54) ein ausschließlich für die Infrastrukturkomponente vorgesehenes Gehäuse aufweist.

6. Vorrichtung nach einem der Ansprüche 1 bis 4 **dadurch gekennzeichnet, dass** mindestens eine Infrastrukturkomponente (52, 54) in eine andere Komponente des Parkraums (20) integriert ist.

7. Vorrichtung nach einem der Ansprüche 1 bis 6 **dadurch gekennzeichnet, dass** die Infrastrukturkomponente (52, 54) ausgebildet ist, mindestens eine zweite Information auszugeben.

8. Vorrichtung nach einem der Ansprüche 1 bis 7 **dadurch gekennzeichnet, dass** die Zustandsinformation eine Systeminformation, insbesondere eine Information über einen Systemfehler und/oder eine Debuginformation, umfasst.

9. Vorrichtung nach einem der Ansprüche 1 bis 8 **dadurch gekennzeichnet, dass** die Zustandsinformation eine Information über eine aktuell ausgeführte Aktion und/oder eine zukünftige Aktion einer Parkraumkomponente umfasst, wobei die Parkraumkomponente insbesondere eine Schranke und/oder ein Tor und/oder eine Tür und/oder eine Absperrung ist.

10. Vorrichtung nach einem der Ansprüche 1 bis 9, **dadurch gekennzeichnet, dass** die Zustandsinformation eine zukünftige Position eines sich innerhalb des Parkraums (20) automatisiert bewegenden Fahrzeugs (10) umfasst.

11. Verfahren zum Bereitstellen einer Zustandsinformation eines automatischen Valet-Parking Systems (1) mindestens umfassend die Schritte
- Erfassen einer Zustandsinformation des automatischen Valet-Parking Systems (1), wobei
- die Zustandsinformation eine Information über einen aktuellen Betriebszustand des automatischen Valet-Parking Systems (1) umfasst und
die Zustandsinformation eine Information über eine aktuell ausgeführte Aktion und/oder eine zukünftige Aktion eines sich innerhalb des Parkraums (20) automatisiert bewegenden Fahrzeugs (10) umfasst und die Zustandsinformation eine Information über eine aktuelle Position und eine aktuelle Bewegungsrichtung des sich innerhalb des Parkraums (20) automatisiert bewegenden Fahrzeugs (10) umfasst, Ausgeben der Zustandsinformation mittels einer Vorrichtung nach einem der Ansprüche 1 bis 10,
**dadurch gekennzeichnet, dass** eine Mehrzahl von Infrastrukturkomponenten (52, 54) vorgesehen ist, wobei das Ausgeben der Zustandsinformation auf ausgewählten Infrastrukturkomponenten (52, 54) erfolgt, abhängig von einer aktuellen Situation des automatischen Valet-Parking Systems (1) und einer aktuellen Situation in dem Parkraum (20) und der jeweiligen Position der Infrastrukturkomponenten (52, 54), wobei eine aktuelle Situation des automatischen Valet-Parking Systems (1) durch eine zentrale Parkmanagementeinrichtung (15) des automatischen Valet-Parking Systems (1) und dessen Umfeldüberwachungssystem erfasst und analysiert wird.

12. Verfahren nach Anspruch 11, **dadurch gekennzeichnet, dass** die Zustandsinformation zusätzlich mittels eines Ausgabesystems eines sich innerhalb des Parkraums automatisiert bewegenden Fahrzeugs (10) ausgegeben wird.

13. Verfahren nach einem der Ansprüche 11 oder 12 **dadurch gekennzeichnet, dass** die Zustandsinformation zusätzlich an ein Mobilgerät, insbesondere ein Smart Phone und/oder eine Kommunikationseinrichtung eines Fahrzeugs gesendet wird.

14. Computerprogramm, welches Programmcode zur Durchführung eines Verfahrens Bereitstellen einer Zustandsinformation eines automatischen Valet-Parking Systems (1) nach einem der Ansprüche 12 bis 13 umfasst, wenn das Computerprogramm auf einem Computer ausgeführt wird.

15. Automatisches Valet-Parking System umfassend eine Vorrichtung nach einem der Ansprüche 1 bis 13 und eine zentrale Parkmanagementeinrichtung welche ausgebildet ist eine Zustandsinformation des automatischen Valet-Parking Systems (1) zu erfassen und eine Infrastrukturkomponente zur Ausgabe der Zustandsinformation anzusteuern.

16. Infrastrukturkomponente (52, 54), insbesondere zur Verwendung in einer Vorrichtung nach einem der Ansprüche 1 bis 10 und/oder in einem Verfahren nach einem der Ansprüche 10 bis 12 und/oder in einem automatischen Valet-Parking System nach Anspruch 14, **dadurch gekennzeichnet, dass** die Infrastrukturkomponente (52, 54) ausgebildet ist, stationär innerhalb eines Parkraums (20) angeordnet zu werden und dass die Infrastrukturkomponente (52, 54) eingerichtet ist, eine Zustandsinformation eines automatischen Valet-Parking Systems (1) auszugeben.

17. Infrastrukturkomponente (54) nach Anspruch 16 umfassend einen Trägerabschnitt (58) und mindestens eine Beleuchtungseinrichtung (59), wobei die Beleuchtungseinrichtung (59) ausgebildet ist verschiedene Zustände anzunehmen, wobei ein jeweiliger Zustand einer bestimmten Zustandsinformation des automatischen Valet-Parking Systems (1) zugeordnet ist.

18. Infrastrukturkomponente nach Anspruch 17, wobei ein Zustand der Beleuchtungseinrichtung (59) durch eine Lichtfarbe und/oder ein Blinkmuster gekennzeichnet ist.

## Claims

1. Apparatus for providing state information relating to an automatic valet parking system (1), comprising a plurality of infrastructure components (52, 54) which are outside the vehicle, are arranged in a stationary manner within a parking area (20) assigned to the automatic valet parking system (1) and are configured to output state information relating to the automatic valet parking system (1),
wherein the state information comprises information relating to a current operating state of the automatic valet parking system (1) and the state information comprises information relating to an action that is currently being performed and/or a future action of a vehicle (10) moving in an automated manner within the parking area (20) and the state information comprises information relating to a current position and a current direction of movement of the vehicle (10) moving in an automated manner within the parking area (20), and wherein
the state information is output on selected infrastructure components (52, 54) depending on a current situation in the parking area (20) and the respective position of the infrastructure components (52, 54), wherein a current situation of the automatic valet parking system (1) is captured and analysed by a central parking management device (15) of the automatic valet parking system (1) and its environment monitoring system, with the result that an output is effected only by means of those infrastructure components (52, 54) where this output can be perceived by an addressee.

2. Apparatus according to Claim 1, **characterized in that** at least one infrastructure component (52, 54) is designed to audibly output the state information, wherein the infrastructure component has a loudspeaker, in particular.

3. Apparatus according to Claim 1, **characterized in that** at least one infrastructure component (52, 54) is designed to visually output the state information, wherein the infrastructure component has, in particular, a screen and/or traffic lights and/or a lighting device and/or a flag.

4. Apparatus according to Claim 1, **characterized in that** at least one infrastructure component (52, 54) is designed to haptically output the state information, wherein the infrastructure component has, in particular, a component which is embedded in the floor of the parking area (20) and is movable.

5. Apparatus according to one of Claims 1 to 4, **characterized in that** at least one infrastructure component (52, 54) has a housing provided exclusively for the infrastructure component.

6. Apparatus according to one of Claims 1 to 4, **characterized in that** at least one infrastructure component (52, 54) is integrated in another component of the parking area (20).

7. Apparatus according to one of Claims 1 to 6, **characterized in that** the infrastructure component (52, 54) is designed to output at least second information.

8. Apparatus according to one of Claims 1 to 7, **characterized in that** the state information comprises system information, in particular information relating to a system fault and/or debug information.

9. Apparatus according to one of Claims 1 to 8, **characterized in that** the state information comprises information relating to an action that is currently being performed and/or a future action of a parking area component, wherein the parking area component is, in particular, a barrier and/or a gate and/or a door and/or a fence.

10. Apparatus according to one of Claims 1 to 9, **characterized in that** the state information comprises a future position of a vehicle (10) moving in an automated manner within the parking area (20).

11. Method for providing state information relating to an automatic valet parking system (1), at least comprising the steps of
- capturing state information relating to the automatic valet parking system (1), wherein
- the state information comprises information relating to a current operating state of the automatic valet parking system (1) and
the state information comprises information relating to an action that is currently being performed and/or a future action of a vehicle (10) moving in an automated manner within the parking area (20) and the state information comprises information relating to a current position and a current direction of movement of the vehicle (10) moving in an automated manner within the parking area (20), outputting the state information by means of an apparatus according to one of Claims 1 to 10, **characterized in that** a plurality of infrastructure components (52, 54) are provided, wherein the state information is output on selected infrastructure components (52, 54) depending on a current situation of the automatic valet parking system (1) and a current situation in the parking area (20) and the respective position of the infrastructure components (52, 54), wherein a current situation of the automatic valet parking system (1) is captured and analysed by a central parking management device (15) of the automatic valet parking system (1) and its environment monitoring system.

12. Method according to Claim 11, **characterized in that** the state information is additionally output by means of an output system of a vehicle (10) moving in an automated manner within the parking area.

13. Method according to either of Claims 11 and 12, **characterized in that** the state information is additionally transmitted to a mobile device, in particular a smartphone and/or a communication device of a vehicle.

14. Computer program which comprises program code for carrying out a method for providing state information relating to an automatic valet parking system (1) according to one of Claims 12 to 13 when the computer program is executed on a computer.

15. Automatic valet parking system comprising an apparatus according to one of Claims 1 to 13 and a central parking management device which is designed to capture state information relating to the automatic valet parking system (1) and to control an infrastructure component to output the state information.

16. Infrastructure component (52, 54), in particular for use in an apparatus according to one of Claims 1 to 10 and/or in a method according to one of Claims 10 to 12 and/or in an automatic valet parking system according to Claim 14, **characterized in that** the infrastructure component (52, 54) is designed to be arranged in a stationary manner within a parking area (20), and **in that** the infrastructure component (52, 54) is configured to output state information relating to an automatic valet parking system (1).

17. Infrastructure component (54) according to Claim 16 comprising a carrier section (58) and at least one lighting device (59), wherein the lighting device (59) is designed to assume various states, wherein a respective state is assigned to particular state information relating to the automatic valet parking system (1).

18. Infrastructure component according to Claim 17, wherein a state of the lighting device (59) is indicated by a light colour and/or a flashing pattern.

## Revendications

1. Dispositif pour produire une information d'état d'un système de voiturier automatique (1), comprenant une pluralité de composants d'infrastructure (52, 54) extérieurs au véhicule, qui sont agencés de manière fixe à l'intérieur d'une zone de stationnement (20) associée au système de voiturier automatique (1) et qui sont conçus pour émettre une information d'état du système de voiturier automatique (1),
dans lequel l'information d'état comprend une information concernant un état de fonctionnement actuel du système de voiturier automatique (1) et l'information d'état comprend une information concernant une action actuellement exécutée et/ou une action future d'un véhicule (10) se déplaçant de manière automatisée à l'intérieur de la zone de stationnement (20) et l'information d'état comprend une information concernant une position actuelle et une direction de déplacement actuelle du véhicule (10) se déplaçant de manière automatisée à l'intérieur de la zone de stationnement (20), et dans lequel
l'émission de l'information d'état est effectuée sur des composants d'infrastructure (52, 54) sélectionnés, en fonction d'une situation actuelle dans la zone de stationnement (20) et de la position respective des composants d'infrastructure (52, 54), dans lequel une situation actuelle du système de voiturier automatique (1) est acquise et analysée par un dispositif central de gestion de stationnement (15) du système de voiturier automatique (1) et son système de surveillance de l'environnement, de telle sorte qu'une émission ne soit effectuée qu'au moyen des composants d'infrastructure (52, 54) où elle peut être prise en compte par un destinataire.

2. Dispositif selon la revendication 1, **caractérisé en ce qu'**au moins un composant d'infrastructure (52, 54) est conçu pour émettre de manière auditive l'information d'état, dans lequel le composant d'infrastructure comporte notamment un haut-parleur.

3. Dispositif selon la revendication 1, **caractérisé en ce qu'**au moins un composant d'infrastructure (52, 54) est conçu pour émettre de manière visuelle l'information d'état, dans lequel le composant d'infrastructure comporte notamment un écran et/ou un feu de signalisation et/ou un dispositif d'éclairage et/ou un drapeau.

4. Dispositif selon la revendication 1, **caractérisé en ce qu'**au moins un composant d'infrastructure (52, 54) est conçu pour émettre l'information d'état de manière haptique, dans lequel le composant d'infrastructure comporte notamment un composant qui est encastré dans le sol de la zone de stationnement (20) et qui est mobile.

5. Dispositif selon l'une des revendications 1 à 4, **caractérisé en ce qu'**au moins un composant d'infrastructure (52, 54) comporte un boîtier prévu exclusivement pour le composant d'infrastructure.

6. Dispositif selon l'une des revendications 1 à 4, **caractérisé en ce qu'**au moins un composant d'infrastructure (52, 54) est intégré dans un autre composant de la zone de stationnement (20).

7. Dispositif selon l'une des revendications 1 à 6, **caractérisé en ce que** le composant d'infrastructure (52, 54) est conçu pour produire au moins une seconde information.

8. Dispositif selon l'une des revendications 1 à 7 **caractérisé en ce que** l'information d'état comprend une information système, notamment une information concernant une erreur système et/ou une information de débogage.

9. Dispositif selon l'une des revendications 1 à 8 **caractérisé en ce que** l'information d'état comprend une information concernant une action actuelle exécutée et/ou une action future d'un composant de zone de stationnement, le composant de zone de stationnement étant notamment une barrière et/ou un portail et/ou une porte et/ou une fermeture.

10. Dispositif selon l'une des revendications 1 à 9, **caractérisé en ce que** l'information d'état comprend une position future d'un véhicule (10) se déplaçant de manière automatisée à l'intérieur de la zone de stationnement (20).

11. Procédé pour produire une information d'état d'un système de voiturier automatique (1) comprenant au moins les étapes consistant à
- acquérir une information d'état du système de voiturier automatique (1), dans lequel
- l'information d'état comprend une information concernant un état de fonctionnement actuel du système de voiturier automatique (1) et
l'information d'état comprend une information concernant une action actuellement exécutée et/ou une action future d'un véhicule (10) se déplaçant de manière automatisée à l'intérieur de la zone de stationnement (20), et l'information d'état comprend une information concernant une position actuelle et une direction de déplacement actuelle du véhicule (10) se déplaçant de manière automatisée à l'intérieur de la zone de stationnement (20), et émettre l'information d'état au moyen d'un dispositif selon l'une des revendications 1 à 10,
**caractérisé en ce qu'**il est prévu une pluralité de composants d'infrastructure (52, 54), dans lequel l'émission de l'information d'état est effectuée sur des composants d'infrastructure (52, 54) sélectionnés, en fonction d'une situation actuelle du système de voiturier automatique (1) et d'une situation actuelle dans la zone de stationnement (20) et de la position respective des composants d'infrastructure (52, 54), dans lequel une situation actuelle du système de voiturier automatique (1) est acquise et analysée par un dispositif central de gestion de stationnement (15) du système de voiturier automatique (1) et son système de surveillance de l'environnement.

12. Procédé selon la revendication 11, **caractérisé en ce que** l'information d'état est en outre délivrée en sortie au moyen d'un système d'émission d'un véhicule (10) se déplaçant de manière automatisée à l'intérieur de la zone de stationnement.

13. Procédé selon l'une des revendications 11 ou 12, **caractérisé en ce que** l'information d'état est en outre envoyée à un appareil mobile, notamment un téléphone intelligent et/ou un dispositif de communication d'un véhicule.

14. Programme d'ordinateur comprenant un code de programme permettant de mettre en œuvre un procédé pour produire une information d'état d'un système de voiturier automatique (1) selon l'une des revendications 12 à 13, lorsque le programme d'ordinateur est exécuté sur un ordinateur.

15. Système de voiturier automatique comprenant un dispositif selon l'une des revendications 1 à 13 et un dispositif central de gestion de stationnement conçu pour acquérir une information d'état du système de voiturier automatique (1) et pour commander un composant d'infrastructure afin qu'il émette l'information d'état.

16. Composant d'infrastructure (52, 54), notamment destiné à être utilisé dans un dispositif selon l'une des revendications 1 à 10 et/ou dans un procédé selon l'une des revendications 10 à 12 et/ou dans un système de voiturier automatique selon la revendication 14, **caractérisé en ce que** le composant d'infrastructure (52, 54) est conçu pour être disposé de manière fixe à l'intérieur d'une zone de stationnement (20) et **en ce que** le composant d'infrastructure (52, 54) est conçu pour émettre une information d'état d'un système de voiturier automatique (1).

17. Composant d'infrastructure (54) selon la revendication 16, comprenant une partie de support (58) et au moins un dispositif d'éclairage (59), le dispositif d'éclairage (59) étant conçu pour passer dans des états différents, dans lequel un état respectif est associé à une information d'état déterminée du système de voiturier automatique (1).

18. Composant d'infrastructure selon la revendication 17, dans lequel un état du dispositif d'éclairage (59) est **caractérisé par** une couleur de lumière et/ou un motif de clignotement.
